# EUROPÄISCHE PATENTANMELDUNG

(11) **EP 2 657 501 A1**
(43) Veröffentlichungstag der Anmeldung: **30.10.2013**
(21) Anmeldenummer: 13161680.7
(22) Anmeldetag: 11.12.2012
(51) Int. Cl.: F02M 37/22, H01H 37/76

(54) **Filterheizung**

(30) Priorität: 12.12.2011 DE 102011088262
(62) Teilanmeldung aus: 12196513.1
(71) Anmelder: MAHLE International GmbH, 70376 Stuttgart (DE); Bayerische Motorenwerke Aktiengesellschaft, 80809 München (DE)
(72) Erfinder: Klingbacher, Patrik, 9400 Wolfsberg (AT); Pfeiffer, Gert, 9020 Klagenfurt (AT); Praprotnig, Heinz, 9125 Kühnsdorf (AT)
(74) Vertreter: BRP Renaud & Partner

(57) **Zusammenfassung**

Die Erfindung betrifft eine Filterheizung (1), mit
- einer Leiterplatte (2), auf der ein elektronisches Bauteil (3) in Form eines MOSFET angeordnet ist,
- einem elektrisch leitenden Sicherungselement (4), über das das elektronische Bauteil (3) (MOSFET) mit einem Massepol (5) verbunden ist, wobei das Sicherungselement (4) derart ausgebildet ist, dass es bei Erreichen oder Überschreiten einer vordefinierten Grenztemperatur die Verbindung löst, so dass ein Stromfluss unterbrochen und die Filterheizung (1) abgeschaltet wird.

## Beschreibung

Die vorliegende Erfindung betrifft eine Filterheizung, insbesondere eine Kraftstoffheizung.

Filterheizungen, insbesondere Kraftstoffheizungen, werden eingesetzt, um bei tiefen Außentemperaturen ein Ausfällen von Feststoffen, insbesondere bei Dieselkraftstoffen, zu vermeiden und damit insbesondere auch die im Bereich von Kraftstoffleitungen angeordneten Filtereinrichtungen durchgängig zu halten. Moderne Kraftstoffheizungen weisen dabei üblicherweise elektrische Leiterplatten auf, auf welchen elektronische Bauteile, wie beispielweise Steuerelemente, Transistoren oder ähnliches montiert und elektrisch miteinander verbunden sind. Unter bestimmten Betriebszuständen kann dabei ein sogenannter Metall-Oxid-Halbleiter-Feldeffekttransistor (MOSFET), der üblicherweise auf der Leiterplatte angeordnet ist, sehr heiß werden, was dann wiederum zu einer Beschädigung der Leiterplatte führen kann und deshalb unbedingt vermieden werden muss.

Die vorliegende Erfindung beschäftigt sich daher mit dem Problem, eine verbesserte Filterheizung, insbesondere eine Kraftstoffheizung anzugeben, die insbesondere vor einer thermischen Schädigung effektiv geschützt ist.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, bei einer an sich bekannten Filterheizung, insbesondere bei einer Kraftstoffheizung mit einer Leiterplatine bzw. einer Leiterplatte auf der ein elektronisches Bauteil angeordnet ist, eine elektrische Verbindung zu diesem elektronischen Bauteil derart auszubilden, dass diese bei Erreichen oder Überschreiten einer vordefinierten Grenztemperatur, beispielsweise ab 180° C, unterbrochen und dadurch ein Stromfluss unterbunden und die Filterheizung abgeschaltet wird. Hierzu ist ein einerseits gegen das elektronische Bauteil und andererseits gegen einen Massepol der Filterheizung mechanisch federnd vorgespanntes und elektrisch leitendes Sicherungselement vorgesehen, das über einen temperatursensiblen Werkstoff mit dem elektronischen Bauteil und/oder mit dem Massepol verbunden ist, wobei dieser temperatursensible Werkstoff erfindungsgemäß bei Erreichen oder Überschreiten der vordefinierten Grenztemperatur die Verbindung löst, wodurch dann der Stromfluss unterbrochen und die Filterheizung abgeschaltet wird. Bei dem erfindungsgemäß ausgebildeten Sicherungselement handelt es sich somit um eine nicht selbst rückstellende Sicherung. Sie bewirkt ein dauerhaftes Abschalten der Filterheizung bei Erreichen oder Überschreiten einer vordefinierten Grenztemperatur. Durch die Unterbrechung des Stromflusses kann über die Motorelektrik der Fahrer eines Kraftfahrzeuges informiert werden, dass dringender Servicebedarf besteht und die Filterheizung bzw. das gesamte Filter aus Sicherheitsgründen gewechselt werden muss.

Bei einer vorteilhaften Weiterbildung der erfindungsgemäßen Lösung weist der temperatursensible Werkstoff niederschmelzendes Zinn mit einem Schmelzpunkt von ca. 180 bis 200° C auf. Die Verbindung zwischen dem vorgespannten und elektrisch leitenden Sicherungselement einerseits und dem Massepol und/oder dem elektronischen Bauteil andererseits ist somit über eine Verlötung unter Verwendung von niederschmelzendem Zinn ausgeführt, welches bei Erreichen bzw. Überschreiten von beispielsweise 180° C schmilzt, woraufhin dann das federnd vorgespannte Sicherungselement gelöst und der Stromfluss unterbrochen wird. Von großem Vorteil dabei ist, dass niederschmelzendes Zinn sowohl elektrisch leitend als auch kraftübertragend ausgestaltet ist, wobei die kraftübertragende Wirkung bei Erreichen oder Überschreiten der vordefinierten Grenztemperatur aufgehoben und dadurch der Stromfluss unterbrochen und die Filterheizung abgeschaltet wird. Alternativ dazu kann der temperatursensible Werkstoff auch einen temperatursensiblen Klebstoff aufweisen, mittels welchem das erfindungsgemäße Sicherungselement beispielsweise elektrisch leitend mit dem elektronischen Bauteil verklebt ist. Dieser Klebstoff verliert dabei seine Festigkeit bei ca. 180° C, beispielsweise durch ein Weichwerden oder ein Schmelzen, woraufhin er dann die durch die Federvorspannung des Sicherungselements auf die Klebeverbindung aufgebrachte Kraft nicht mehr halten kann, so dass die Verbindung gelöst und der Stromfluss unterbrochen werden. Selbstverständlich muss ein derartiger temperatursensibler Klebstoff kraftstoffbeständig sein, so dass er nicht allein durch das chemisch vergleichsweise aggressive Milieu des Kraftstoffs angegriffen wird und seine Festigkeit verliert. Bei der Verwendung eines derartigen Klebstoffs muss das Sicherungselement üblicherweise direkt elektrisch leitend mit der Leiterplatte verbunden sein, da der Klebstoff normalerweise elektrischen Strom nicht leitet.

Bei einer vorteilhaften Weiterbildung der erfindungsgemäßen Lösung ist das Sicherungselement als metallisches Stanz-Biegeteil ausgebildet. Hierdurch ist es möglich, das Sicherungselement nicht nur kostengünstig sondern auch fertigungstechnisch einfach und trotzdem äußerst exakt herzustellen, wodurch die Wirtschaftlichkeit und die Qualitätsansprüche gleichermaßen befriedigt werden können.

Bei einer weiteren vorteilhaften Ausführungsform der erfindungsgemäßen Lösung ist das Sicherungselement an einer Schraube, insbesondere an einer Mitteldomschraube, angebunden, die zugleich den Massepol bildet. In diesem Fall ist somit die elektrische Verbindung zwischen dem Sicherungselement und der Schraube durch eine mechanische Verbindung und nicht durch den temperatursensiblen Werkstoff gegeben, so dass der temperatursensible Werkstoff ausschließlich zwischen dem Sicherungselement und dem elektronischen Bauteil angeordnet ist. Dies bietet den großen Vorteil, dass bei Erreichen oder Überschreiten der Grenztemperatur durch ein Lösen der Verbindung zwischen dem Sicherungselement und dem elektronischen Bauteil zwar zuverlässig der Stromfluss unterbrochen und damit die Filterheizung abgeschaltet wird, das Sicherungselement an sich jedoch durch die mechanischen Anbindung an die Schraube an seiner vordefinierten Stelle gehalten werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a: eine Seitenansicht auf eine erfindungsgemäße Filterheizung, insbesondere eine Kraftstofffilterheizung, mit einem Sicherungselement in stromübertragendem Funktionszustand,
- Fig. 1b: eine Darstellung wie in Fig. 1a, jedoch bei ausgelöstem Sicherungselement und dadurch abgeschalteter Filterheizung,
- Fig. 2: eine Darstellung wie in Fig. 1b, jedoch bei einer Ansicht von schräg oben,
- Fig. 3: eine mögliche Ausführungsform eines erfindungsgemäßen Sicherungselementes,
- Fig. 4: eine alternative Ausführungsform der erfindungsgemäßen Filterheizung,
- Fig. 5: eine Darstellung wie in Fig. 3, jedoch bei einem alternativen Sicherungselement,
- Fig. 6: eine Ansicht auf die erfindungsgemäße Filterheizung von oben bei einem wiederum alternativen Sicherungselement,
- Fig. 7: eine Ansicht auf die Filterheizung gemäß der Fig. 6 jedoch von unten.

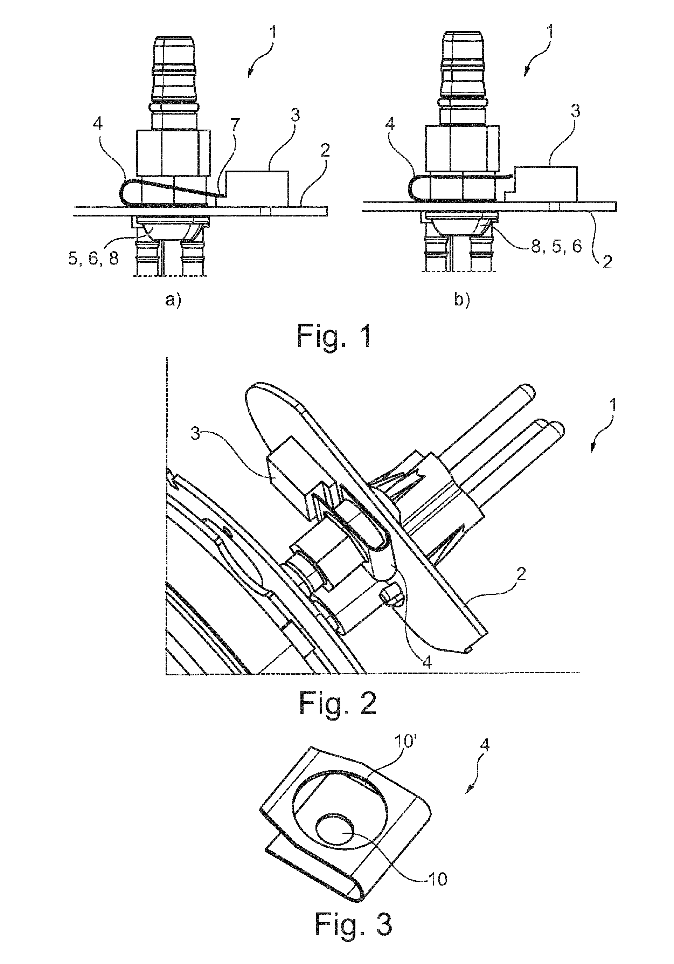

Entsprechend den Fig. 1a und 1b, weist eine erfindungsgemäße Filterheizung 1, insbesondere eine Kraftstoffheizung, eine Leiterplatte 2 auf, auf welcher ein elektronisches Bauteil 3, beispielsweise ein Metall-Oxid-Halbleiter-Feldeffekttransistor (MOSFET) angeordnet ist. Das elektronische Bauteil 3 ist dabei über ein elektrisch leitendes Sicherungselement 4 mit einem Massepol 5, hier in der Art einer Mitteldomschraube 6, elektrisch leitend verbunden. Das Sicherungselement 4 ist in der Art einer U-förmig gebogenen Sicherungsklammer ausgebildet und einerseits elektrisch leitend mit dem Massepol 5 und andererseits elektrisch leitend mit dem elektronischen Bauteil 3 verbunden. Zudem ist das Sicherungselement 4 mechanisch federnd gegenüber dem elektronischen Bauteil 3 vorgespannt und über einen temperatursensiblen Werkstoff 7 mit dem elektronischen Bauteil 3 verbunden. Der temperatursensible Werkstoff 7 löst bei Erreichen oder Überschreiten einer vordefinierten Grenztemperatur die Verbindung zwischen dem Sicherungselement 4 und dem elektronischen Bauteil 3, wodurch ein Stromfluss unterbrochen und die Filterheizung 1 abgeschaltet wird. Dieser Zustand ist dann in Fig. 1b gezeigt.

Der temperatursensible Werkstoff 7 kann beispielsweise niederschmelzendes Zinn mit einem Schmelzpunkt von ca. 180 bis 200° C aufweisen, wobei ein derartiger Werkstoff 7 den großen Vorteil hat, dass dieser elektrisch leitend ausgebildet ist und dadurch der Stromfluss ungehindert durch den Werkstoff 7 fließen kann. Alternativ hierzu kann der temperatursensible Werkstoff 7 selbstverständlich auch als Klebstoff ausgebildet sein, der üblicherweise nicht elektrisch leitend ist, der aber bis zur vordefinierten Grenztemperatur von beispielsweise 180° C die Verbindung zwischen dem Sicherungselement 4 und dem elektronischen Bauteil 3 fixiert. Bei Erreichen oder Überschreiten der Grenztemperatur verliert dieser Klebstoff seine Festigkeit, woraufhin dann die elektrische Verbindung und der Stromfluss unterbrochen und die Filterheizung abgeschaltet werden. Bei der Verwendung eines elektrisch nichtleitenden Werkstoffs 7 zur Fixierung der Verbindung zwischen dem Sicherungselement 4 und dem elektronischen Bauteil 3 muss selbstverständlich eine elektrisch leitende Kontaktierung zwischen diesen beiden Bauteilen 3, 4 unabhängig vom Werkstoff 7, das heißt unabhängig vom Klebstoff, gewährleistet sein.

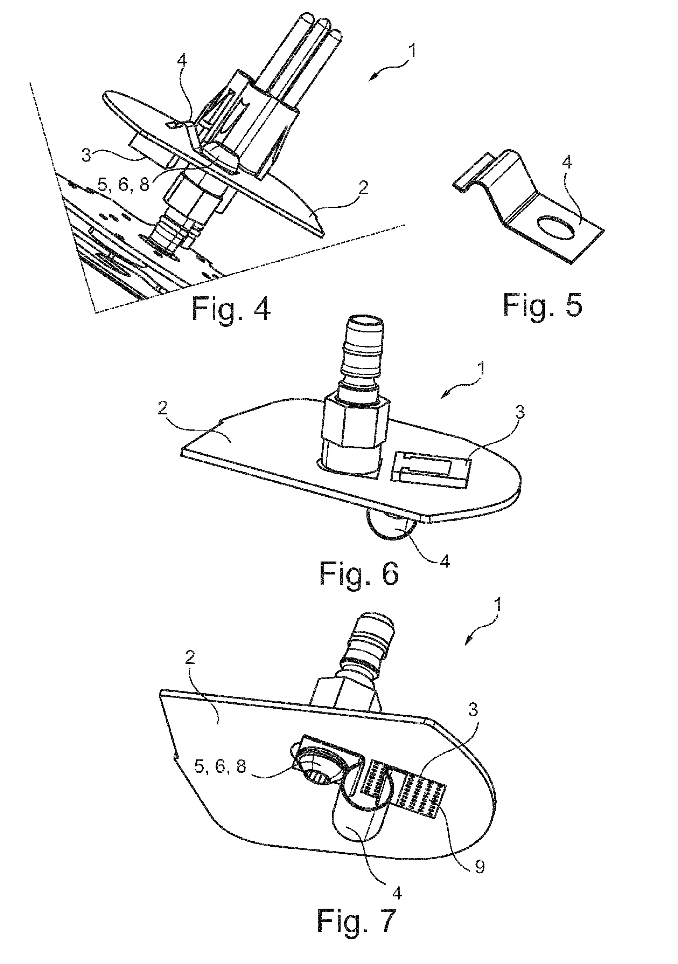

Das Sicherungselement 4 gemäß den Fig. 1 bis 3 ist dabei als U-förmige Klammer ausgebildet, die vergleichsweise einfach als metallisches Stanz-Biegeteil ausgebildet ist. Betrachtet man dabei die Fig. 3, so kann man erkennen, dass das Sicherungselement 4 in seinen U-Schenkeln zwei unterschiedlich große Durchgangsöffnungen 10 und 10' aufweist, wobei das Sicherungselement 4 über die Schraube 8, die durch die Durchgangsöffnung 10 gesteckt ist, an der Leiterplatte 2 angeschraubt wird. Die Durchgangsöffnung 10' hingegen hat einen so großen Durchmesser, dass eine ungehinderte Bewegung dieses U-Schenkels zum Lösen von dem elektronischen Bauteil 3 bei Erreichen oder Überschreiten der Grenztemperatur möglich ist. In ähnlicher Weise kann auch das gemäß den Fig. 4 bis 7 ausgebildete Sicherungselement 4 hergestellt werden. Das Sicherungselement 4 ist gemäß den Fig. 1 bis 7 an einer Schraube 8, insbesondere an einer Mitteldomschraube 6, angebunden, die zugleich den Massepol 5 bildet. Betrachtet man dabei die Ausführungsformen gemäß den Fig. 1 und 2, so kann man erkennen, dass das Sicherungselement 4 auf derselben Seite der Leiterplatte 2 angeordnet ist, wie das elektronische Bauteil 3, während bei den Ausführungsformen gemäß den Fig. 4 bis 7 das elektronische Bauteil 3 auf der dem Sicherungselement 4 gegenüberliegenden Seite der Leiterplatte 2 angeordnet ist. Dabei ist in Fig. 7 gezeigt, dass die Leiterplatte 2 ein diese durchbrechendes Fenster 9 aufweist, und über dieses Fenster 9 die elektrisch leitende Verbindung zwischen dem Sicherungselement 4 einerseits und dem elektronischen Bauteil 3 andererseits hergestellt wird.

Sämtlichen Ausführungsformen der Filterheizung 1 ist dabei üblicherweise gemein, dass das Sicherungselement 4 an der temperaturkritischen Stelle des elektronischen Bauteils 3, das heißt an einem sogenannten Hotspot, angebracht wird, wobei eine Durchkontaktierung sowohl den Wärmetransport als auch den elektrischen Kontakt zwischen dem elektronischen Bauteil 3 und dem Sicherungselement 4 gewährleisten. Über die Schraube 8, mit der bisher üblicherweise lediglich die Leiterplatte 2 in einem nicht dargestellten Gehäuse fixiert wurde, kann nun zugleich das Sicherungselement 4 vorgespannt werden. Bei der Verwendung eines MOSFET als elektronischem Bauteil 3 wird zum Steuern desselben üblicherweise kein zusätzliches NTC-Element verwendet, so dass der MOSFET als reiner Schalter zum Ein- und Ausschalten der Stromversorgung für die Filterheizung dient. Der MOSFET hat selbst die Eigenschaften eines NTC-Elementes. Die Verlustleistung, die dabei am MOSFET entsteht, führt zu einer starken Erwärmung des MOSFET. Die in der Filterheizung 1 verwendeten Heizelemente können beispielsweise sogenannte selbstregelnde PTC-Elemente oder Heizschlangen, Heizdrähte oder andere geeignete elektronische Heizmittel mit ca. 360 Watt Leistung sein.

Betrachtet man nochmals die Fig. 1 bis 7, so kann man erkennen, dass das Sicherungselement 4 in vorgespanntem Zustand an dem elektronischen Bauteil 3, beispielsweise an einer Drainfläche des MOSFET, mit niederschmelzendem Lötzinn angelötet wird. Steigt dabei die Bauteiltemperatur des MOSFET, das heißt die Bauteiltemperatur des elektronischen Bauteils 3, auf über 180° C, schmilzt das Lötzinn auf und das Sicherungselement 4 hebt von der Lötstelle ab. Da das Sicherungselement 4 zugleich auch den elektrischen Kontakt zum Massepol 5 bildet, wird mit dem Abheben von der Lötstelle auch der elektronische Stromfluss unterbrochen.

Die Filterheizung 1 ist Teil eines nicht dargestellten Filtergehäuses und entweder innerhalb des Filtergehäuses oder direkt am Filtergehäuse angebracht und mit dem einströmenden Fluid in Verbindung. Bevorzugt wird die Filterheizung 1 zum Beheizen von Flüssigkeiten, hier insbesondere von Dieselkraftstoffen, aber auch Ölen oder anderen in einem Kraftfahrzeug vorkommenden Flüssigkeiten, wie. Z.B Harnstofflösungen oder Kühlmittel verwendet. Daher kann die Stromunterbrechung, hervorgerufen durch das Erreichen der Grenztemperatur zu einer Reaktion der Motorelektrik und des Fahrzeugbetriebssystems führen, der Art, dass der Fahrer des Fahrzeuges aufgefordert wird sofort die nächste Werkstatt anzufahren.

Durch Auslesen des Fahrzeugbetriebssystems ist dann der Werkstatt bekannt, dass das Sicherungselement 4 der Filterheizung 1 zu einer Unterbrechung des Stromflusses geführt hat. Die Werkstatt wird dann entweder die Filterheizung 1 einzeln wechseln oder aber das Filtergehäuse samt darin vorkommender Filterheizung 1. Dadurch kann vermieden werden, dass es zu einer Überhitzung des Filters kommt. Es kann also ein mögliche Brandgefahr ausgeschlossen werden.

Mit der erfindungsgemäßen Filterheizung 1 ist eine konstruktiv besonders einfache Ausführungsform einer Thermosicherung gefunden, die mittels eines vergleichsweise kostengünstig und einfach herzustellenden Sicherungselements 4 in der Art eines Stanz-Biegeteils ausgebildet ist. Die gezeigten Ausführungsformen des Sicherungselementes 4 sollen dabei lediglich rein exemplarisch verstanden werden, so dass auch andere, davon abweichende aber den gleichen Zweck erfüllende Sicherungselemente 4 von der Erfindung mit umfasst sein sollen.

Generell betrifft die Erfindung eine Filterheizung 1, insbesondere eine Kraftstofffilterheizung, mit einer Leiterplatte 2, auf der ein elektronisches Bauteil 3 angeordnet ist, einem einerseits gegen das elektronische Bauteil 3 und andererseits gegen einen Massepol 5 der Filterheizung 1, insbesondere einer Kraftstofffilterheizung, mechanisch federnd vorgespannten und elektrisch leitenden Sicherungselement 4, das über einen temperatursensiblen Werkstoff 7 mit dem elektronischen Bauteil 3 und/oder dem Massepol 5 verbunden ist. Der temperatursensible Werkstoff 7 löst bei Erreichen oder Überschreiten einer vordefinierten Grenztemperatur die Verbindung, so dass ein Stromfluss unterbrochen und die Filterheizung 1, insbesondere die Kraftstofffilterheizung, abgeschaltet wird.

Das elektronische Bauteil 3 kann als Metall-Oxid-Halbleiter-Feldeffekttransistor MOSFET ausgebildet sein. Der temperatursensible Werkstoff 7 kann nieder schmelzendes Zinn mit einem Schmelzpunkt von 180-200 °C aufweisen. Denkbar ist auch, dass der temperatursensible Werkstoff 7 ein Klebstoff ist, der seine Festigkeit bei ca. 180-200 °C verliert.

Generell kann das Sicherungselement 4 auch als metallische Blattfeder ausgebildet sein, wobei auch denkbar ist, dass das Sicherungselement 4 als metallisches Stanz-Biegeteil ausgebildet ist.

Das Sicherungselement 4 kann zudem an einer Schraube 8, insbesondere an einer Mitteldomschraube 6, angebunden sein, die zugleich den Massepol 5 bildet. Darüber hinaus ist denkbar, dass das Sicherungselement 4 auf der dem elektronischen Bauteil 3 gegenüberliegenden Seite der Platte 2 angeordnet und über ein die Platte 2 durchbrechendes Fenster 9 elektrisch leitend mit dieser verbunden ist.

## Patentansprüche

1. Filterheizung (1), mit
- einer Leiterplatte (2), auf der ein elektronisches Bauteil (3) in Form eines MOSFET angeordnet ist,
- einem elektrisch leitenden Sicherungselement (4), über das das elektronische Bauteil (3) (MOSFET) mit einem Massepol (5) verbunden ist, wobei das Sicherungselement (4) derart ausgebildet ist, dass es bei Erreichen oder Überschreiten einer vordefinierten Grenztemperatur die Verbindung löst, so dass ein Stromfluss unterbrochen und die Filterheizung (1) abgeschaltet wird.

2. Filterheizung (1) mit einer Leiterplatte (2), auf der ein elektronisches Bauteil (3) in Form eines MOSFET angeordnet ist, wobei eine elektrische Verbindung zu diesem elektronischen Bauteil (3) derart ausgebildet ist, dass diese bei Erreichen oder Überschreiten einer vordefinierten Grenztemperatur diese Verbindung unterbrochen und dadurch ein Stromfluss unterbunden und die Filterheizung (1) abgeschaltet wird.

3. Leiterplatte (2) für eine Filterheizung (1), auf der ein elektronisches Bauteil (3) in Form eines MOSFET und ein elektrisch leitendes Sicherungselement (4) angeordnet sind, über das das elektronische Bauteil (3) (MOSFET) mit einem Massepol (5) verbunden ist, wobei das Sicherungselement (4) derart ausgebildet ist, dass es bei Erreichen oder Überschreiten einer vordefinierten Grenztemperatur die Verbindung löst, so dass ein Stromfluss unterbrochen und die Filterheizung (1) abgeschaltet wird.

4. Filterheizung (1) oder Leiterplatte (2) nach einem der vorangegangenen Patentansprüche, **dadurch gekennzeichnet, dass** die Unterbrechung des Stromflusses an eine Motorelektrik signalisierbar ist.

5. Filterheizung (1) oder Leiterplatte (2) nach einem der vorangegangenen Patentansprüche, **dadurch gekennzeichnet, dass** die Filterheizung (1) oder Leiterplatte (2) derart ausgebildet ist, dass bei einer Unterbrechung des Stromflusses über die Motorelektrik der Fahrer eines Kraftfahrzeuges darüber informiert, dass dringender Servicebedarf besteht.

6. Filterheizung (1) oder Leiterplatte (2) nach einem der vorangegangenen Patentansprüche, **dadurch gekennzeichnet, dass** die Filterheizung (1) oder Leiterplatte (2) derart ausgebildet ist, dass die Stromunterbrechung, hervorgerufen durch das Erreichen der Grenztemperatur, zu einer Reaktion der Motorelektrik führt.

7. Filterheizung (1) oder Leiterplatte (2) nach einem der vorangegangenen Patentansprüche, **dadurch gekennzeichnet, dass** das Sicherungselement (4) an einem Hotspot des elektronischen Bauteils (3) angebracht ist.
